(19) **Europäisches Patentamt European Patent Office Office européen des brevets**

(11) **EP 4 465 236 B1**

(12) **EUROPEAN PATENT SPECIFICATION**

(45) Date of publication and mention of the grant of the patent:
**08.04.2026 Bulletin 2026/15**

(21) Application number: **24175496.9**

(22) Date of filing: **13.05.2024**

(51) International Patent Classification (IPC):
**G06T 5/70** *(2024.01)*    **G06T 5/10** *(2006.01)*

(52) Cooperative Patent Classification (CPC):
**G06T 5/70; G06T 5/10;** G06N 3/045;
G06T 2207/20056; G06T 2207/20081;
G06T 2207/20084

(54) **METHOD AND APPARATUS WITH ADAPTIVE FREQUENCY FILTERING FOR ROBUST IMAGE RECONSTRUCTION**

VERFAHREN UND VORRICHTUNG MIT ADAPTIVER FREQUENZFILTERUNG ZUR ROBUSTEN BILDREKONSTRUKTION

PROCÉDÉ ET APPAREIL À FILTRAGE DE FRÉQUENCE ADAPTATIF POUR RECONSTRUCTION D'IMAGE ROBUSTE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **15.05.2023 KR 20230062592**
**24.08.2023 KR 20230111196**

(43) Date of publication of application:
**20.11.2024 Bulletin 2024/47**

(73) Proprietors:
• **Samsung Electronics Co., Ltd.**
**Suwon-si, Gyeonggi-do 16677 (KR)**
• **Seoul National University R&DB Foundation**
**Seoul 08826 (KR)**

(72) Inventors:
• **YOO, Jaehyoung**
**16678 Suwon-si (KR)**
• **RYOU, Donghun**
**08826 Seoul (KR)**
• **YOO, Hyewon**
**08826 Seoul (KR)**
• **HAN, Bohyung**
**08826 Seoul (KR)**

(74) Representative: **Arnold & Siedsma**
**Bezuidenhoutseweg 57**
**2594 AC The Hague (NL)**

(56) References cited:
**CN-A- 110 738 605**

• **ZHAO RUI ET AL: "Enhancement of a CNN-Based Denoiser Based on Spatial and Spectral Analysis", 2019 IEEE INTERNATIONAL CONFERENCE ON IMAGE PROCESSING (ICIP), IEEE, 22 September 2019 (2019-09-22), pages 1124 - 1128, XP033642235, [retrieved on 20190815], DOI: 10.1109/ICIP.2019.8804295**
• **"Digital Image Processing", 1 January 2008, PRENTICE HALL, ISBN: 978-0-13-168728-8, article GONZALEZ RAFAEL C. ET AL: "Frequency Domain Filtering Fundamentals", pages: 257 - 257, XP093198992**

## Description

FIELD

The following description relates to a method and apparatus with adaptive frequency filtering for robust image reconstruction.

BACKGROUND

An input image captured by a camera may include various types of noise. For example, there may be shot noise occurring when light is detected by a photodiode in an image sensor, circuit noise occurring when an analog signal is converted to a digital signal, and quantization noise occurring when a digital signal is quantized and represented. A method of removing noise included in an image may be a denoising method of removing noise included in an input image using a denoising neural network based on a convolutional neural network (CNN). However, when removing noise from an input image using the denoising neural network, the denoising neural network may have a desirable denoising performance for an input image having a similar noise distribution to that of images used for training but may have a degrading denoising performance for an input image having a different noise distribution from that of the images used for training.

Known from the art is "Enhancement of a CNN-Based Denoiser Based on Spatial and Spectral Analysis" by R. Zhao et al, from the 2019 IEEE International Conference on Image Processing (ICIP), pages 1124-128.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

According to an aspect of the present disclosure, a processor-implemented method as defined in any of the claims 1-11 is provided.

According to another aspect of the present disclosure, a non-transitory computer-readable storage medium as defined in claim 12 is provided.

According to yet another aspect of the present disclosure, an electronic device as defined in claim 13 or 14 is provided.

Other features and aspects will be apparent from the following detailed description, the drawings, and the claims.

BRIEF DESCRIPTION OF THE DRAWINGS

FIG. 1 illustrates an example method of denoising an input image by an electronic device according to one or more example embodiments.

FIG. 2 illustrates an example of obtaining a denoised image in which noise is removed from an input image by an electronic device according to one or more example embodiments.

FIG. 3 illustrates an example structure of a filter generation neural network according to one or more example embodiments.

FIG. 4 illustrates an example of training a filter generation neural network by an electronic device according to one or more example embodiments.

FIG. 5 illustrates examples of an input image, a denoised image, a noise distribution of an input image, and a noise distribution of a denoised image according to one or more example embodiments.

FIG. 6 illustrates an example structure of an electronic device according to one or more example embodiments.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known, after an understanding of the disclosure of this application, may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. The terms "comprises," "includes," and "has" specify the presence of stated features, numbers, operations, members, elements, and/or combinations thereof, but do not preclude the presence or addition of one or more other features, numbers, operations, members, elements, and/or combinations thereof. The use of the term "may" herein with respect to an example or embodiment (for example, as to what an example or embodiment may include or implement) means that at least one example or embodiment exists where such a feature is included or implemented, while all examples are not limited thereto.

Throughout the specification, when an element is described as "connected to" or "coupled to" another element, it may be directly "connected to" or "coupled to" the other component, or there may be one or more other components intervening therebetween. In contrast, when an element is described as "directly connected to" or "directly coupled to" another element, there can be no other elements intervening therebetween. Likewise, similar expressions, for example, "between" and "immediately between," and "adjacent to" and "immediately adjacent to," are also to be construed in the same way. As used herein, the term "and/or" includes any one and any combination of any two or more of the associated listed items.

Although terms such as "first," "second," and "third," or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish one member, component, region, layer, or section from another member, component, region, layer, or section. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein.

Also, in the description of example embodiments, detailed description of structures or functions that are thereby known after an understanding of the disclosure of the present application will be omitted when it is deemed that such description will cause ambiguous interpretation of the example embodiments.

Hereinafter, examples will be described in detail with reference to the accompanying drawings, and like reference numerals in the drawings refer to like elements throughout.

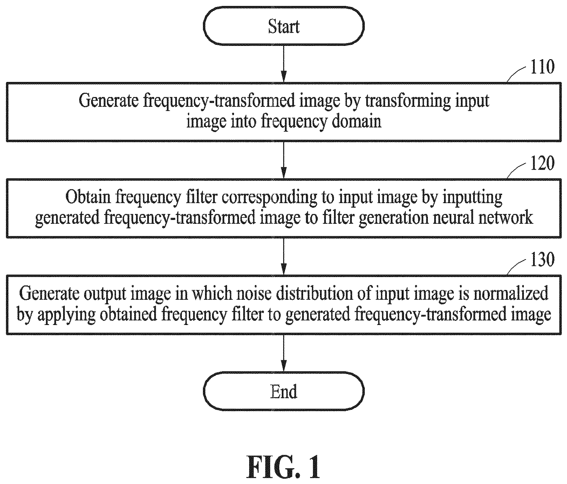

FIG. 1 illustrates an example method of denoising an input image by an electronic device according to one or more example embodiments.

An image generated by a camera may include various types of noise. Noise included in an image may be removed using a denoising neural network based on a convolutional neural network (CNN). The denoising neural network may refer to one or more models having a machine learning structure configured to extract a denoised image in which noise is removed from an input image in response to the image being input.

The denoising neural network may be overfitted to a noise distribution of training images used for training. That is, the denoising neural network may effectively perform denoising on an image having a similar noise distribution to that of the training images but may not effectively perform denoising on an image having a different noise distribution from that of the training images. For example, when the denoising neural network is trained with training images including Gaussian noise that follows a normal distribution with a standard deviation of 10, the denoising neural network may not be able to effectively denoise an image having Gaussian noise that follows a normal distribution with a standard deviation of 15. For another example, when the denoising neural network is trained with training images having real noise, the denoising neural network may not be able to effectively denoise an image having synthetic noise.

An electronic device of one or more embodiments may solve such issues described above by normalizing a noise distribution of an image. When a noise distribution of an input image is normalized, the electronic device may input an image having the normalized noise distribution to the denoising neural network that is trained in advance. That is, the electronic device of one or more embodiments may transform a noise distribution of an image into a noise distribution on which denoising may be effectively performed by the denoising neural network. The denoising neural network may effectively perform denoising on an image in which a noise distribution is normalized from an input image.

Referring to FIG. 1, in operation 110, the electronic device may generate a transformed frequency image (e.g., a frequency-transformed image) by transforming an input image into a frequency domain.

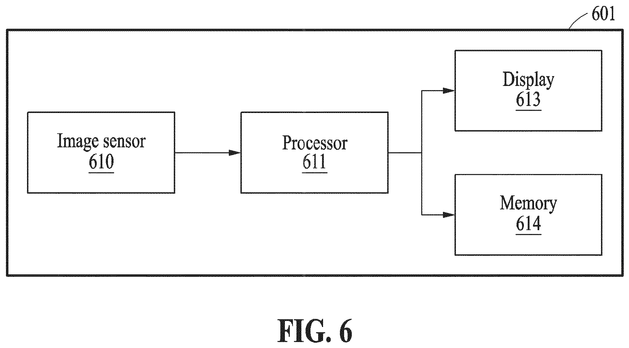

In an example embodiment, the electronic device may obtain an input image. For example, the electronic device (e.g., an electronic device 601 of FIG. 6) may obtain an input image from a camera provided inside the electronic device. An image sensor (e.g., an image sensor 610 of FIG. 6) included in the camera may include a plurality of photodiodes. The plurality of photodiodes included in the image sensor may receive light and generate an input image of an external object. For another example, the electronic device may obtain an input image from an external electronic device. The input image used herein may be data in a spatial domain.

In an example embodiment, the electronic device may transform the input image from the spatial domain to the frequency domain using a Fourier transform. In an example, transforming the input image from the spatial domain to the frequency domain may include applying a frequency analysis using a change in brightness of a pixel as a signal while following the input image in an x-axis or y-axis direction. The intensity of each frequency component obtained through the Fourier transform may be defined as a spectrum, and the spectrum may be represented as a transformed frequency image.

In operation 120, the electronic device may obtain (e.g., generate or determine) a frequency filter (or a target filter) corresponding to the input image by inputting the generated transformed frequency image to a first filter generation neural network.

In an example embodiment, the first filter generation neural network may be one or more models having a machine learning structure configured to extract a frequency filter for denoising an input image in response to an input of the image which is data in the frequency domain. The first filter generation neural network may generate the frequency filter corresponding to the input image by performing a machine learning model-based operation on the input image. The frequency filter may pass or block a specific frequency band. For example, the first filter generation neural network may generate various types of frequency filters including, as non-limiting examples, a band-pass filter (BPF), a band reject filter (BRF), a high-pass filter (HPF), and/or a low-pass filter (LPF).

In operation 130, the electronic device may generate an output image in which a noise distribution of the input image is normalized by applying the obtained frequency filter to the generated transformed frequency image. The electronic device may perform frequency filtering on the transformed frequency image by applying the frequency filter to the transformed frequency image. The electronic device may enhance or attenuate individual frequency regions in the transformed frequency image. For example, the frequency filter may be represented in the form of an image having the same size as the transformed frequency image. In an example, applying the frequency filter to the transformed frequency image may include multiplying the transformed frequency image by the frequency filter.

In an example embodiment, the electronic device may input the output image in which the noise distribution of the input image is normalized to a denoising neural network. The denoising neural network may output a denoised image in which noise is removed from the output image by effectively removing noise from the output image.

As described above, the electronic device may input the transformed frequency image of the input image to the filter generation neural network to normalize a noise distribution of the input image, and may obtain the frequency filter corresponding to the input image from the filter generation neural network.

In a similar way, the electronic device may perform deblurring on an input image. Deblurring may refer to a process of removing blurs from an image. In an example embodiment, the electronic device may generate a transformed frequency image by transforming an input image into the frequency domain, and obtain a frequency filter corresponding to the input image by inputting the generated transformed frequency image to a second filter generation neural network. The second filter generation neural network may be one or more models having a machine learning structure configured to extract a frequency filter for deblurring the input image by which a blur included in the input image is removed.

Also, in a similar way, the electronic device may perform upscaling on an input image. Upscaling may refer to a process of increasing the resolution of an input image. In an example embodiment, the electronic device may generate a transformed frequency image by transforming an input image into the frequency domain, and obtain a frequency filter corresponding to the input image by inputting the generated transformed frequency image to a third filter generation neural network. The third filter generation neural network may be one or more models having a machine learning structure configured to extract a frequency filter for upscaling the input image by which the resolution of the input image is increased.

The first filter generation neural network for denoising the input image, the second filter generation neural network for deblurring the input image, and the third filter generation neural network for upscaling the input image may be different from one another.

In an example embodiment, the electronic device may store a plurality of filter generation neural networks (e.g., the first filter generation neural network, the second filter generation neural network, and the third filter generation neural network). The electronic device may select a filter generation neural network from among the plurality of filter generation neural networks according to a task to be performed on an input image. The electronic device may obtain a frequency filter corresponding to the input image by inputting, to the selected filter generation neural network, a transformed frequency image corresponding to the input image.

Each of the plurality of filter generation neural networks may correspond to one task. For example, the first filter generation neural network may correspond to a noise distribution normalizing task, the second filter generation neural network may correspond to a deblurring task, and the third filter generation neural network may correspond to an upscaling task. In this example, when a task to be performed on an input image is upscaling, the electronic device may select the third filter generation neural network from among the plurality of filter generation neural networks.

The following describes how an electronic device performs a task of normalizing a noise distribution of an input image.

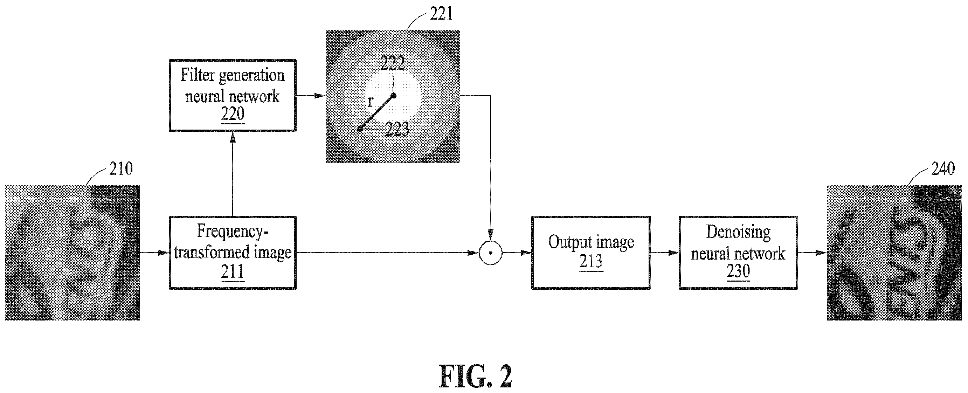

FIG. 2 illustrates an example of obtaining a denoised image in which noise is removed from an input image by an electronic device according to one or more example embodiments.

An electronic device may first transform, into a frequency domain, an input image 210 that is data in a spatial domain. The electronic device may generate a transformed frequency image (e.g., a frequency-transformed image) 211 by transforming the input image 210 into the frequency domain. That is, the transformed frequency image 211 may be data in the frequency domain. The electronic device may obtain a frequency filter 221 corresponding to the input image 210 by inputting the transformed frequency image 211 to a filter generation neural network 220. The frequency filter 221 may be a frequency filter for denoising the transformed frequency image 211.

The frequency filter 221 may be represented in the form of an image having the same size as the transformed frequency image 211. An entire area of the frequency filter 221 may be divided into a preset number of regions. A region in the frequency filter 221 may correspond to an individual frequency band. An entire frequency band of the frequency filter 221 output from the filter generation neural network 220 may be divided into a preset number of frequency bands, and a weighted value may be individually set for each divided frequency band.

For example, the entire area of the frequency filter 221 may be divided into four regions. In this example, a first region may be a set of points whose distance from a center point 222 is $x_1$ or less in the frequency filter 221; a second region may be a set of points whose distance from the center point 222 is greater than $x_1$, and less than or equal to $x_2$, in the frequency filter 221; a third region may be a set of points whose distance from the center point 222 is greater than $x_2$, and less than or equal to $x_3$, in the frequency filter 221; and a fourth region may be a region outside the third region (e.g., a set of points whose distance from the center point 222 is greater than $x_3$). In this example, $x_2$ may be greater than $x_1$, and $x_3$ may be greater than $x_2$. The same weighted value may be set for points included in the same region within the frequency filter 221.

For another example, the frequency filter 221 corresponding to the transformed frequency image 211 may be an LPF. A transfer function of the LPF may be expressed as Equation 1 below, for example.

Equation 1:

$$H(u, v) = \begin{cases} 1 \text{ if } D(u,v) \leq D_0 \\ 0 \text{ if } D(u,v) > D_0 \end{cases}$$

In Equation 1, u and v may represent the coordinate values of the frequency component, H(u, v) represents the transfer function at the frequency coordinate value (u, v), and D(u, v) may represent the distance between the (u, v) coordinate and the origin in the frequency domain. According to Equation 1 above, the frequency filter 221 may pass a frequency band corresponding to an inner region with a radius $D_0$ in the transformed frequency image 211 and block a frequency band corresponding to a remaining region other than the inner region with the radius $D_0$ in the transformed frequency image 211. That is, the entire area of the frequency filter 221 may be divided into two regions. A weighted value of 1 may be set for a point included in an inner region of a circle with a radius $D_0$ from the center of the frequency filter 221, and a weighted value of 0 may be set for a point included in an outer region of the circle.

For another example, the frequency filter 221 corresponding to the transformed frequency image 211 may be a Gaussian LPF. A transfer function of the Gaussian LPF may be expressed as Equation 2 below, for example.

Equation 2:

$$H(u,v) = e^{-D^2(u,v)/2D_0^2}$$

In a case of the frequency filter 221 being a Gaussian LPF, the frequency filter 221 may pass a frequency band corresponding to a central region in the transformed frequency image 211 and block a frequency band corresponding to a remaining region in the transformed frequency image 211. Using the Gaussian LPF may block edge information that may be present in a high-frequency region to acquire a smoothing effect.

In an example embodiment, the electronic device may apply the frequency filter 221 to the transformed frequency image 211 to generate an output image 213 in which a noise distribution of the input image 210 is normalized. For example, the electronic device may generate an intermediate image that is data in the frequency domain by multiplying the transformed frequency image 211 by the frequency filter 221, and the electronic device may generate the output image 213 by transforming the generated intermediate image into the spatial domain. The electronic device may transform the intermediate image from the frequency domain to the spatial domain using an inverse Fourier transform. The output image 213 may be an image with a noise distribution normalized from the input image 210.

The electronic device may input the output image 213 with the normalized noise distribution to a denoising neural network 230. The electronic device may input the output image 213 to the denoising neural network 230 to obtain a denoised image 240 in which noise is removed from the input image 210.

As described above, the filter generation neural network 220 and the denoising neural network 213 may be implemented independently of each other. However, examples are not limited thereto, and the filter generation neural network 220 and the denoising neural network 230 may be implemented as a single integrated network.

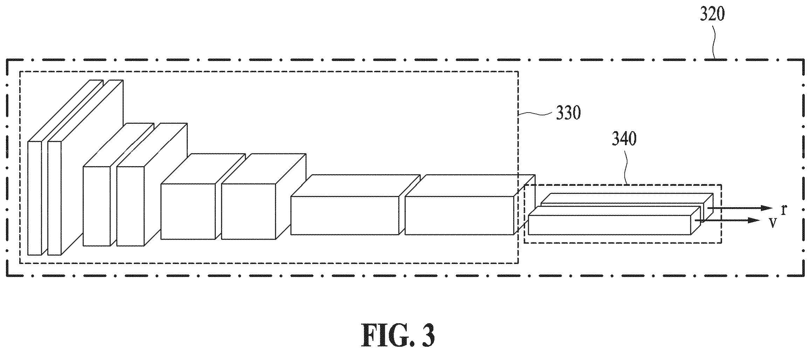

FIG. 3 illustrates an example structure of a filter generation neural network according to one or more example embodiments.

In an example embodiment, a filter generation neural network 320 may include at least one CNN 330 and a fully connected layer 340 connected to the at least one CNN 330. The fully connected layer 340 may include a plurality of layers. The fully connected layer 340 may receive, as an input, an output of the at least one CNN 330.

In an example embodiment, two output data (e.g., first output data and second output data) may be output from the fully connected layer 340. The first output data output from the fully connected layer 340 may correspond to a radius r in a frequency filter (e.g., the frequency filter 221 of FIG. 2). The radius used herein may refer to a distance between one point (e.g., the point 223 of FIG. 2) in the frequency filter (e.g., the frequency filter 221 of FIG. 2) and a center point (e.g., the center point 222 of FIG. 2) of the frequency filter. That is, the first output data may determine a frequency range of a frequency domain in the frequency filter. The second output data output from the fully connected layer 340 may represent a weighted value v corresponding to the radius r corresponding to the first output data in the frequency filter (e.g., the frequency filter 221 of FIG. 2). That is, the weight value corresponding to one point (e.g., the point 223 of FIG. 2) in the frequency filter (e.g., the frequency filter 221 of FIG. 2) may be determined from the second output data. That is, the second output data may determine the importance of a component corresponding to the frequency range determined by the first output data. For example, the weighted value may increase in response to an increase in the importance of a component corresponding to a specific frequency range, and the weighted value may decrease in response to a decrease in the importance of a component corresponding to a specific frequency range.

In an example embodiment, the output data (e.g., the first output data and the second output data) of the fully connected layer 340 may be used to calculate weighted values respectively corresponding to a plurality of points included in the frequency filter. For example, using, as a radius, a distance by which one point included in the frequency filter is separated from an origin point, a weighted value corresponding to the radius may be calculated as a weighted value corresponding to the point. The filter generation neural network 320 may output the frequency filter such that an important frequency component is to be maintained in an image input to the filter generation neural network 320. That is, the frequency filter output by the filter generation neural network 320 may maintain an important low-frequency component and an important high-frequency component in an image. For example, the electronic device may maintain a component in the frequency filter in response to a weighted value of the component being greater than or equal to a threshold.

In an example embodiment, the filter generation neural network 320 may output different frequency filters according to a noise distribution of an image input to the filter generation neural network 320. For example, in consideration that most of noise included in an image is mainly distributed in a high-frequency region, the filter generation neural network 320 may be configured such that a frequency filter output by the filter generation neural network 320 passes more components in a low-frequency band than components in a high-frequency band.

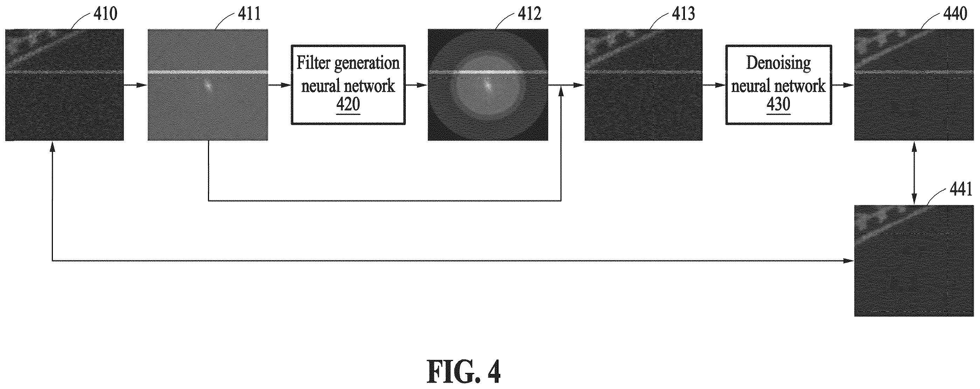

FIG. 4 illustrates an example of training a filter generation neural network by an electronic device according to one or more example embodiments.

In an example embodiment, an electronic device may train a filter generation neural network 420. The electronic device may train the filter generation neural network 420 using, as training data, a training input image 410 and a true denoised image 441 mapped to the training input image 410. In an example, the true denoised image 441 may be an image with noise removed from the training input image 410.

In an example embodiment, the electronic device may train the filter generation neural network 420 and a denoising neural network 430 together. The electronic device may calculate a loss using training data including a training image 411 and train the filter generation neural network 420 and the denoising neural network 430 together using the calculated loss. The electronic device may generate a trained filter generation neural network 420 by repeatedly updating parameters of each of the filter generation neural network 420 and the denoising neural network 430 until the loss converges and/or until the loss becomes less than a threshold loss.

The following describes an example of how a loss is calculated. In an example embodiment, the electronic device may generate a temporary transformed frequency image 411 by transforming the training image 410 included in the training data into a frequency domain. The electronic device may obtain a temporary frequency filter 412 to be applied to the temporary transformed frequency image 411 by inputting the temporary transformed frequency image 411 in the frequency domain to the filter generation neural network 420. The electronic device may generate a temporary output image 413 by applying the obtained temporary frequency filter 412 to the generated temporary transformed frequency image 411. The electronic device may obtain a temporary denoised image 440 by inputting the temporary output image 413 to the denoising neural network 430. The electronic device may calculate a loss using the obtained temporary denoised image 440 and the true denoised image 441 mapped to the training image 410. For example, the loss may represent an error between the temporary denoised image 440 and the true denoised image 441.

In another example embodiment, the electronic device may independently train the filter generation neural network 420 separately from the denoising neural network 430. The electronic device may obtain the denoising neural network 430 that is pre-trained. That is, parameters of the obtained denoising neural network 430 may be predetermined ones, and the electronic device may update only parameters of the filter generation neural network 420. The electronic device may calculate a loss using the training data including the training image 410 and independently train the filter generation neural network 420 using the calculated loss. The loss may be calculated in a similar way described above. In an example embodiment, the electronic device may generate the temporary transformed frequency image 411 by transforming the training image 410 included in the training data into the frequency domain. The electronic device may obtain the temporary frequency filter 412 to be applied to the temporary transformed frequency image 411 by inputting the temporary transformed frequency image 411 in the frequency domain to the filter generation neural network 420. The electronic device may generate the temporary output image 413 by applying the obtained temporary frequency filter 412 to the generated temporary transformed frequency image 411. The electronic device may obtain a temporary denoised image by inputting the temporary output image 413 to a pre-trained denoising neural network (e.g., one that is different from the denoising neural network 430 before being trained). The electronic device may calculate a loss using the obtained temporary denoised image and the true denoised image 441 mapped to the training image 410. For example, the loss may represent an error between the temporary denoised image 440 and the true denoised image 441.

Furthermore, the electronic device may train the filter generation neural network 420 without using a denoising neural network. The electronic device may first normalize a noise distribution of the training image 410. For example, normalizing the noise distribution may be construed herein as transforming a previous noise distribution of the training image 410 into a standard normal distribution with a mean of zero (0) and a standard deviation of 1, but normalizing the noise distribution is not limited thereto. There may be various methods of normalizing a noise distribution, which may vary depending on the settings of the electronic device that performs training of the filter generation neural network 420. The electronic device may obtain a true output image by normalizing the noise distribution in the training image 410. In an example, the electronic device may calculate a loss using the training data including the training image 410 and a true output image corresponding to the training image 410 and may train the filter generation neural network 420 using the calculated loss. For example, the electronic device may generate the temporary transformed frequency image 411 by transforming the training image 410 into the frequency domain, and may input the temporary transformed frequency image 411 of the frequency domain to the filter generation neural network 420 to obtain the temporary frequency filter 412 to be applied to the temporary transformed frequency image 411. The electronic device may generate the temporary output image 413 by applying the obtained temporary frequency filter 412 to the generated temporary transformed frequency image 411. The electronic device may calculate the loss using the obtained temporary output image 413 and the true output image mapped to the training image 410. For example, the loss may represent an error between the temporary output image 413 and the true output image mapped to the training image 410.

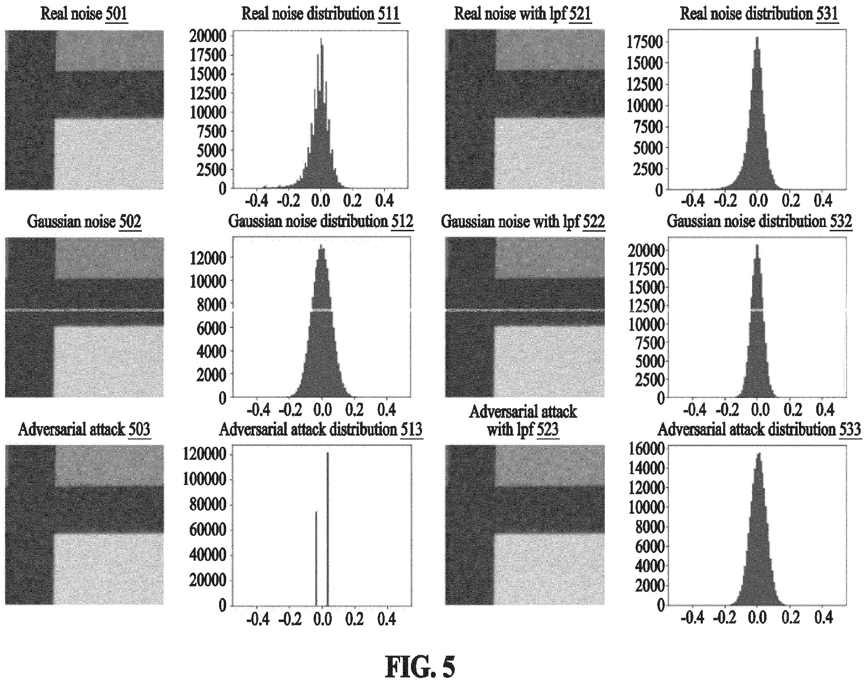

FIG. 5 illustrates examples of an input image, a denoised image, a noise distribution of an input image, and a noise distribution of a denoised image according to one or more example embodiments.

Referring to FIG. 5, input images 501, 502, and 503 may be images to which a frequency filter has not been applied, and noise distributions 511, 512, and 513 may be distributions of noise included in the input images 501, 502, and 503, respectively. In addition, output images 521, 522, and 523 may be images generated as a result of the frequency filter being applied to the input images 501, 502, and 503, respectively, and noise distributions 531, 532, and 533 may be distributions of noise included in the output images 521, 522, and 523, respectively. For example, the output image 521 may be an image to which a frequency filter corresponding to the input image 501 output from a filter generation neural network (e.g., the filter generation neural network 320 of FIG. 3) is applied to the input image 501. Similarly, the output image 522 may be an image to which a frequency filter corresponding to the input image 502 is applied to the input image 502, and the output image 523 may be an image to which a frequency filter corresponding to the input image 503 is applied to the input image 503.

For example, the input image 501 and the noise distribution 511 of the input image 501 may be derived from a real noise dataset. The input image 502 and the noise distribution 512 of the input image 502 may be generated from synthetic noise. The input image 503 and the noise distribution 513 of the input image 503 may be generated from an adversarial attack. The frequency filter output from the filter generation neural network may normalize the respective noise distributions of the input images 501, 502, and 503. Referring to FIG. 5, it may be verified that the distributions of noise included in the input images 501, 502, and 503, respectively, are normalized such that the noise distributions 531, 532, and 533 of the output images 521, 522, and 523 appear similar.

FIG. 6 illustrates an example structure of an electronic device according to one or more example embodiments.

In an example embodiment, an electronic device 601 may include an image sensor 610, a processor 611 (e.g., one or more processors), a display 613, and a memory 614 (e.g., one or more memories). For example, the electronic device 601 may be the electronic device described above with reference to FIGS. 1 to 5. The image sensor 610 may generate an input image of an external object by receiving light. The image sensor 610 may transmit the generated input image to the processor 611. The processor 611 may perform denoising on the input image received from the image sensor 610. The processor 611 may perform the operations for denoising described above with reference to FIGS. 1 to 5. The processor 611 may train a filter generation neural network using training data including a training image. The processor 611 may transmit a denoised image with noise removed from the input image to the display 613 and the memory 615. The display 613 may output the denoised image received from the processor 611. The memory 614 may store the denoised image received from the processor 611. The memory 614 may map the denoised image to the input image and store them together. In an example, the memory 614 may be or include a non-transitory computer-readable storage medium storing instructions that, when executed by the processor 611, configure the processor 611 to perform any one, any combination, or all of the operations and methods described herein with reference to FIGS. 1-5.

The electronic devices, image sensors, processors, displays, memories, electronic device 601, image sensor 610, processor 611, display 613, memory 614, and other apparatuses, devices, units, modules, and components disclosed and described herein with respect to FIGS. 1-6 are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-6 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers. There are deep learning-based image denoising models that proceed with learning (or training) using a dataset of noise models having the same or similar characteristics or distributions as the images to be evaluated. However, even if a trained model would suitably remove image noise during testing, the model may not able to suitably remove noise when using a dataset to which unseen noise is applied. This may still cause an overfitting issue. The issue may be addressed by making learnable in a frequency band a low-pass filter (LPF), which may normalize a distribution of noise. An input images to be evaluated may be made to pass through this low-pass filter before being used as an input of the model, in order to allow a neural network model to better remove noise from the input image. After being passed through the low-pass filter, the input image may have a noise distribution with which the neural network model may remove noise more desirably. That is, a transformed image with a normalized image distribution may be used as an input, such that the model may perform denoising on more various noise distributions. In the case of noise, it is widely distributed in a high-frequency band, and thus allowing a noisy image to pass through the low-pass filter, noise may be reduced. By applying this, the model may be designed to generate different low-pass filters configured to help the denoising network remove noise more desirably according to an input noise distribution, so as to allow preprocessing before a noisy image is input to be performed.

**Claims**

1. A processor-implemented method, comprising:

   generating (110) a transformed frequency image (211) by transforming an input image (210) into a frequency domain;
   obtaining (120) a frequency filter (221) corresponding to the input image (210) by inputting the generated transformed frequency image (211) to a filter generation neural network (220); and

generating (130) an output image (213) in which a noise distribution of the input image (210) is normalized by applying the obtained frequency filter (221) to the generated transformed frequency image (211), **characterised in that**:

wherein first output data that is output from a fully connected layer (340) of the filter generation neural network (220) indicates a frequency range (r) of the frequency domain in the frequency filter (221), and wherein second output data that is output from the fully connected layer (340) of the filter generation neural network (220) indicates a weighted value (v) of a component corresponding to the frequency range (r) determined by the first output data.

2. The method according to claim 1, further comprising generating a denoised image (240) in which noise is removed from the input image (210) by inputting the generated output image (213) to a denoising neural network (230).

3. The method according to claim 1 or 2, wherein the generating of the output image (213) comprises:

generating an intermediate image in the frequency domain by applying the obtained frequency filter (221) to the generated transformed frequency image (211); and

generating the output image (213) by transforming the generated intermediate image into a spatial domain.

4. The method according to any of the previous claims, wherein the filter generation neural network comprises one or more convolutional neural networks, 'CNNs', and wherein the fully connected layer is connected to the one or more CNNs.

5. The method according to any of the previous claims, wherein the obtaining of the frequency filter (221) comprises maintaining the component in the frequency filter (211) in response to the weighted value (v) being greater than or equal to a threshold.

6. The method according to any of the previous claims, wherein the filter generation neural network (220) is configured to output different frequency filters (221) according to a noise distribution of an image input to the filter generation neural network (220).

7. A processor-implemented method, comprising:

generating a temporary transformed frequency image (411) by transforming a training input image (410) into a frequency domain;

obtaining a temporary frequency filter (412) by inputting the generated temporary transformed frequency image (411) to a filter generation neural network (420);

generating a temporary output image (413) by applying the obtained temporary frequency filter (412) to the generated temporary transformed frequency image (411); and

training the filter generation neural network (420) based on a loss calculated using the generated temporary output image (413) and a true output image mapped to the training input image (410),

wherein first output data that is output from a fully connected layer (340) of the filter generation neural network (220) indicates a frequency range (r) of the frequency domain in the frequency filter (221), and wherein second output data that is output from the fully connected layer (340) of the filter generation neural network (220) indicates a weighted value (v) of a component corresponding to the frequency range (r) determined by the first output data.

8. A processor-implemented method, comprising:

generating a temporary transformed frequency image (411) by transforming a training input image (410) into a frequency domain;

obtaining a temporary frequency filter (412) by inputting the generated temporary transformed frequency image (411) to a filter generation neural network (420);

generating a temporary output image (413) by applying the obtained temporary frequency filter (412) to the generated temporary transformed frequency image (411);

generating a temporary denoised image (440) by inputting the generated temporary output image (413) to a denoising neural network (430); and

training the filter generation neural network (420) based on a loss calculated using the generated denoised image (440) and a true denoised image (441) mapped to the training input image (410),

wherein first output data that is output from a fully connected layer (340) of the filter generation neural network (220) indicates a frequency range (r) of the frequency domain in the frequency filter (221), and wherein second output data that is output from the fully connected layer (340) of the filter generation neural network (220) indicates a weighted value (v) of a component corresponding to the frequency range (r) determined by the first output data.

**9.** The method according to claim 8, wherein the method comprises training the filter generation neural network (420) and the denoising neural network (430) together based on the loss.

**10.** The method according to claim 9, wherein the method further comprises using the trained denoising neural network (430) in the method as defined in claim 2 or any of the claims 3-5 in so far as depending on claim 2.

**11.** The method according to any of the claims 7-10, wherein the method further comprises using the trained filter generation neural network (420) in the method as defined in any of the claims 1-6.

**12.** A non-transitory computer-readable storage medium (614) storing instructions that, when executed by one or more processors (611), configure the one or more processors (611) to perform the method as defined in any of the previous claims.

**13.** An electronic device (601), comprising one or more processors (611) configured to perform the method as defined in any of the claims 1-11.

**14.** The electronic device according to claim 13, in so far as depending on claim 1, wherein the electronic device (601) further comprises an image sensor (610) comprising a plurality of photodiodes, and wherein the one or more processors (611) are configured to generate the input image (210) using the plurality of photodiodes of the image sensor (610).

**Patentansprüche**

**1.** Prozessorimplementiertes Verfahren, das Folgendes umfasst:

Erzeugen (110) eines umgewandelten Frequenzbildes (211) durch Umwandeln eines Eingangsbildes (210) in eine Frequenzdomäne;
Erhalten (120) eines Frequenzfilters (221), der dem Eingangsbild (210) entspricht, durch Eingeben des erzeugten umgewandelten Frequenzbildes (211) in ein neuronales Netz (220) zur Filtererzeugung; und
Erzeugen (130) eines Ausgangsbildes (213), in dem eine Rauschverteilung des Eingangsbildes (210) durch Anwenden des erhaltenen Frequenzfilters (221) auf das erzeugte umgewandelte Frequenzbild (211) normalisiert ist;
**dadurch gekennzeichnet, dass**:
erste Ausgangsdaten, die von einer vollständig verbundenen Schicht (340) des neuronalen Netzes (220) zur Filtererzeugung ausgegeben werden, einen Frequenzbereich (r) der Frequenzdomäne in dem Frequenzfilter (221) angeben, und zweite Ausgangsdaten, die von der vollständig verbundenen Schicht (340) des neuronalen Netzes (220) zur Filtererzeugung ausgegeben werden, einen gewichteten Wert (v) einer Komponente angeben, die dem durch die ersten Ausgangsdaten bestimmten Frequenzbereich (r) entspricht.

**2.** Verfahren nach Anspruch 1, das ferner die Erzeugung eines entrauschten Bildes (240) umfasst, in dem Rauschen aus dem Eingangsbild (210) entfernt wird, indem das erzeugte Ausgangsbild (213) in ein neuronales Netz (230) zur Entrauschung eingegeben wird.

**3.** Verfahren nach Anspruch 1 oder 2, wobei das Erzeugen des Ausgangsbildes (213) folgendes umfasst:

Erzeugen eines Zwischenbildes in der Frequenzdomäne durch Anwenden des erhaltenen Frequenzfilters (221) auf das erzeugte umgewandelte Frequenzbild (211); und
Erzeugen des Ausgangsbildes (213) durch Umwandeln des erzeugten Zwischenbildes in einen räumlichen Bereich.

**4.** Verfahren nach einem der vorhergehenden Ansprüche, wobei das neuronale Netz zur Filtererzeugung ein oder mehrere neuronale Faltungsnetze (CNNs, Convolutional Neural Networks) umfasst, und wobei die vollständig verbundene Schicht mit dem einen oder den mehreren CNNs verbunden ist.

5. Verfahren nach einem der vorhergehenden Ansprüche, wobei das Erhalten des Frequenzfilters (221) das Beibehalten der Komponente in dem Frequenzfilter (211) als Reaktion darauf umfasst, dass der gewichtete Wert (v) größer oder gleich einem Schwellenwert ist.

6. Verfahren nach einem der vorhergehenden Ansprüche, wobei das neuronale Netz (220) zur Filtererzeugung so konfiguriert ist, dass es verschiedene Frequenzfilter (221) gemäß einer Rauschverteilung eines in das neuronale Netz (220) zur Filtererzeugung eingegebenen Bildes ausgibt.

7. Prozessorimplementiertes Verfahren, das Folgendes umfasst:

Erzeugen eines temporären umgewandelten Frequenzbildes (411) durch Umwandeln eines Trainingseingangsbildes (410) in eine Frequenzdomäne;
Erhalten eines temporären Frequenzfilters (412) durch Eingeben des erzeugten temporären umgewandelten Frequenzbildes (411) in ein neuronales Netz (420) zur Filtererzeugung;
Erzeugen eines temporären Ausgangsbildes (413) durch Anwenden des erhaltenen temporären Frequenzfilters (412) auf das erzeugte temporäre umgewandelte Frequenzbild (411); und
Trainieren des neuronalen Netzes (420) zur Filtererzeugung basierend auf einem Verlust, der unter Verwendung des erzeugten temporären Ausgangsbildes (413) und eines echten Ausgangsbildes, das auf das Trainingseingangsbild (410) abgebildet ist, berechnet wird, wobei erste Ausgangsdaten, die von einer vollständig verbundenen Schicht (340) des neuronalen Netzes (220) zur Filtererzeugung ausgegeben werden, einen Frequenzbereich (r) der Frequenzdomäne in dem Frequenzfilter (221) angeben, und zweite Ausgangsdaten, die von der vollständig verbundenen Schicht (340) des neuronalen Netzes (220) zur Filtererzeugung ausgegeben werden, einen gewichteten Wert (v) einer Komponente angeben, die dem durch die ersten Ausgangsdaten bestimmten Frequenzbereich (r) entspricht.

8. Prozessorimplementiertes Verfahren, das Folgendes umfasst:

Erzeugen eines temporären umgewandelten Frequenzbildes (411) durch Umwandeln eines Trainingseingangsbildes (410) in eine Frequenzdomäne;
Erhalten eines temporären Frequenzfilters (412) durch Eingeben des erzeugten temporären umgewandelten Frequenzbildes (411) in ein neuronales Netz (420) zur Filtererzeugung;
Erzeugen eines temporären Ausgangsbildes (413) durch Anwenden des erhaltenen temporären Frequenzfilters (412) auf das erzeugte temporäre umgewandelte Frequenzbild (411);
Erzeugen eines temporären entrauschten Bildes (440) durch Eingeben des erzeugten temporären Ausgangsbildes (413) in ein neuronales Netz (430) zur Entrauschung; und
Trainieren des neuronalen Netzes (420) zur Filtererzeugung basierend auf einem Verlust, der unter Verwendung des erzeugten entrauschten Bildes (440) und eines echten entrauschten Bildes (441), das auf das Trainingseingangsbild (410) abgebildet ist, berechnet wird,
wobei erste Ausgangsdaten, die von einer vollständig verbundenen Schicht (340) des neuronalen Netzes (220) zur Filtererzeugung ausgegeben werden, einen Frequenzbereich (r) der Frequenzdomäne in dem Frequenzfilter (221) angeben, und zweite Ausgangsdaten, die von der vollständig verbundenen Schicht (340) des neuronalen Netzes (220) zur Filtererzeugung ausgegeben werden, einen gewichteten Wert (v) einer Komponente angeben, die dem durch die ersten Ausgangsdaten bestimmten Frequenzbereich (r) entspricht.

9. Verfahren nach Anspruch 8, wobei das Verfahren das gemeinsame Trainieren des neuronalen Netzes (420) zur Filtererzeugung und des neuronalen Netzes (430) zur Entrauschung basierend auf dem Verlust umfasst.

10. Verfahren nach Anspruch 9, wobei das Verfahren ferner die Verwendung des trainierten neuronalen Netzes (430) zur Entrauschung in dem Verfahren nach Anspruch 2 oder nach einem der Ansprüche 3 bis 5 umfasst, soweit diese von Anspruch 2 abhängen.

11. Verfahren nach einem der Ansprüche 7 bis 10, wobei das Verfahren ferner die Verwendung des trainierten neuronalen Netzes (420) zur Filtererzeugung in dem Verfahren nach einem der Ansprüche 1 bis 6 umfasst.

12. Nichtflüchtiges, computerlesbares Speichermedium (614), in dem Anweisungen gespeichert sind, die, wenn sie von einem oder mehreren Prozessoren (611) ausgeführt werden, den einen oder die mehreren Prozessoren (611) so konfigurieren, dass sie das Verfahren nach einem der vorhergehenden Ansprüche durchführen.

**13.** Elektronische Vorrichtung (601), die einen oder mehrere Prozessoren (611) umfasst, die so konfiguriert sind, dass sie das Verfahren nach einem der Ansprüche 1 bis 11 durchführen.

**14.** Elektronische Vorrichtung nach Anspruch 13, insofern als sie von Anspruch 1 abhängt, wobei die elektronische Vorrichtung (601) ferner einen Bildsensor (610) umfasst, der eine Vielzahl von Fotodioden umfasst, und wobei der eine oder die mehreren Prozessoren (611) so konfiguriert sind, dass sie das Eingangsbild (210) unter Verwendung der Vielzahl von Fotodioden des Bildsensors (610) erzeugen.

**Revendications**

**1.** Procédé mis en œuvre par processeur, comprenant :

la génération (110) d'une image transformée en domaine fréquentiel (211) par transformation d'une image d'entrée (210) dans un domaine fréquentiel,
l'obtention (120) d'un filtre de fréquence (221) correspondant à l'image d'entrée (210) par introduction, dans un réseau neuronal de génération de filtre (220), de l'image transformée en domaine fréquentiel (211) générée, et
la génération (130) d'une image de sortie (213) dans laquelle une distribution de bruit de l'image d'entrée (210) est normalisée par application, à l'image transformée en domaine fréquentiel générée (211), du filtre de fréquence (221) obtenu ;
**caractérisé en ce que** :
des premières données de sortie issues d'une couche entièrement connectée (340) du réseau neuronal de génération de filtre (220) indiquent une plage de fréquences (r) du domaine fréquentiel du filtre de fréquence (221), et des deuxièmes données de sortie issues de la couche entièrement connectée (340) du réseau neuronal de génération de filtre (220) indiquent une valeur pondérée (v) d'une composante correspondant à la plage de fréquences (r) déterminée par les premières données de sortie.

**2.** Procédé selon la revendication 1, comprenant en outre la génération d'une image débruitée (240) dans laquelle le bruit a été supprimé de l'image d'entrée (210) par introduction de l'image de sortie (213) générée dans un réseau neuronal de débruitage (230).

**3.** Procédé selon la revendication 1 ou 2, dans lequel la génération de l'image de sortie (213) comprend :

la génération d'une image intermédiaire dans le domaine fréquentiel par application, à l'image transformée en domaine fréquentiel (211) générée, du filtre de fréquence (221) obtenu, et
la génération de l'image de sortie (213) par transformation de l'image intermédiaire générée dans un domaine spatial.

**4.** Procédé selon l'une quelconque des revendications précédentes, dans lequel le réseau neuronal de génération de filtre comprend un ou plusieurs réseaux neuronaux convolutifs (RNC), et dans lequel la couche entièrement connectée est connectée au(x) RNC.

**5.** Procédé selon l'une quelconque des revendications précédentes, dans lequel l'obtention du filtre de fréquence (221) comprend le maintien de la composante dans le filtre de fréquence (211) en réaction au fait que la valeur pondérée (v) est supérieure ou égale à un seuil.

**6.** Procédé selon l'une quelconque des revendications précédentes, dans lequel le réseau neuronal de génération de filtre (220) est configuré pour produire des filtres de fréquence (221) différents en fonction d'une distribution de bruit d'une image introduite dans le réseau neuronal de génération de filtre (220).

**7.** Procédé mis en œuvre par processeur, comprenant :

la génération d'une image transformée en domaine fréquentiel temporaire (411) par transformation d'une image d'entrée d'entraînement (410) dans un domaine fréquentiel,
l'obtention d'un filtre de fréquence temporaire (412) par introduction, dans un réseau neuronal de génération de filtre (420), de l'image transformée en domaine fréquentiel temporaire (411) générée, la génération d'une image de sortie temporaire (413) par application, à l'image transformée en domaine fréquentiel temporaire (411) générée, du filtre de fréquence temporaire (412) obtenu, et

EP 4 465 236 B1

l'entraînement du réseau neuronal de génération de filtre (420) en fonction d'une perte calculée à l'aide de l'image de sortie temporaire (413) générée et d'une image de sortie véritable mappée sur l'image d'entrée d'entraînement (410) ;

des premières données de sortie issues d'une couche entièrement connectée (340) du réseau neuronal de génération de filtre (220) indiquant une plage de fréquences (r) du domaine fréquentiel du filtre de fréquence (221), et des deuxièmes données de sortie issues de la couche entièrement connectée (340) du réseau neuronal de génération de filtre (220) indiquant une valeur pondérée (v) d'une composante correspondant à la plage de fréquences (r) déterminée par les premières données de sortie.

8. Procédé mis en œuvre par processeur, comprenant :

la génération d'une image transformée en domaine fréquentiel temporaire (411) par transformation d'une image d'entrée d'entraînement (410) dans un domaine fréquentiel,

l'obtention d'un filtre de fréquence temporaire (412) par introduction, dans un réseau neuronal de génération de filtre (420), de l'image transformée en domaine fréquentiel temporaire (411) générée, la génération d'une image de sortie temporaire (413) par application, à l'image transformée en domaine fréquentiel temporaire (411) générée, du filtre de fréquence temporaire (412) obtenu,

la génération d'une image débruitée temporaire (440) par introduction, dans un réseau neuronal de débruitage (430), de l'image de sortie temporaire (413) générée, et

l'entraînement du réseau neuronal de génération de filtre (420) en fonction d'une perte calculée à l'aide de l'image débruitée (440) générée et d'une image débruitée (441) véritable mappée sur l'image d'entrée d'entraînement (410) ;

des premières données de sortie issues d'une couche entièrement connectée (340) du réseau neuronal de génération de filtre (220) indiquant une plage de fréquences (r) du domaine fréquentiel du filtre de fréquence (221), et des deuxièmes données de sortie issues de la couche entièrement connectée (340) du réseau neuronal de génération de filtre (220) indiquant une valeur pondérée (v) d'une composante correspondant à la plage de fréquences (r) déterminée par les premières données de sortie.

9. Procédé selon la revendication 8, ledit procédé comprenant l'entraînement conjoint du réseau neuronal de génération de filtre (420) et du réseau neuronal de débruitage (430) en fonction de la perte.

10. Procédé selon la revendication 9, ledit procédé comprenant en outre l'utilisation du réseau neuronal de débruitage (430) entraîné dans le procédé défini dans la revendication 2 ou dans l'une quelconque des revendications 3 à 5 dans la mesure où elles dépendent de la revendication 2.

11. Procédé selon l'une quelconque des revendications 7 à 10, ledit procédé comprenant en outre l'utilisation du réseau neuronal de génération de filtre (420) entraîné dans le procédé défini dans l'une quelconque des revendications 1 à 6.

12. Support de stockage non transitoire lisible par ordinateur (614) sur lequel sont stockées des instructions qui, lorsqu'elles sont exécutées par un ou plusieurs processeurs (611), configurent le ou les processeurs (611) de façon qu'ils réalisent le procédé défini dans l'une quelconque des revendications précédentes.

13. Appareil électronique (601) comprenant un ou plusieurs processeurs (611) configurés pour réaliser le procédé défini dans l'une quelconque des revendications 1 à 11.

14. Appareil électronique selon la revendication 13, dans la mesure où elle dépend de la revendication 1, ledit appareil électronique (601) comprenant en outre un capteur d'image (610) comprenant une pluralité de photodiodes, et le ou lesdits processeurs (611) étant configurés pour générer l'image d'entrée (210) à l'aide de la pluralité de photodiodes du capteur d'image (610).

14

```
                    ┌─────────────┐
                    │    Start    │
                    └─────────────┘
                           │
                           ▼                          ⌐ 110
┌──────────────────────────────────────────────────────────┐
│    Generate frequency-transformed image by transforming input │
│              image into frequency domain                    │
└──────────────────────────────────────────────────────────┘
                           │
                           ▼                          ⌐ 120
┌──────────────────────────────────────────────────────────┐
│       Obtain frequency filter corresponding to input image by inputting │
│  generated frequency-transformed image to filter generation neural network │
└──────────────────────────────────────────────────────────┘
                           │
                           ▼                          ⌐ 130
┌──────────────────────────────────────────────────────────┐
│  Generate output image in which noise distribution of input image is normalized │
│ by applying obtained frequency filter to generated frequency-transformed image │
└──────────────────────────────────────────────────────────┘
                           │
                           ▼
                    ┌─────────────┐
                    │     End     │
                    └─────────────┘
```

**FIG. 1**

**FIG. 2**

**FIG. 3**

FIG. 4

FIG. 5

601

| | |
|---|---|
| Image sensor 610 | Processor 611 |

Display 613

Memory 614

**FIG. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. ZHAO et al.** Enhancement of a CNN-Based Denoiser Based on Spatial and Spectral Analysis. *IEEE International Conference on Image Processing (ICIP)*, 2019, 1124-128